# EUROPEAN PATENT SPECIFICATION

(11) **EP 1 596 115 B1**
(45) Date of publication and mention of the grant of the patent: **17.01.2007**
(21) Application number: 05103674.7
(22) Date of filing: 03.05.2005
(51) Int. Cl.: F16L 33/207, F16L 13/14

(54) **Arrangement for connecting a rigid tube to a flexible tube**
Anordnung zum Verbinden eines steifen Rohres mit einem biegsamen Schlauch
Agencement pour le raccordement d'un tube rigide avec un tube souple

(30) Priority: 14.05.2004 FR 0450948
(43) Date of publication of application: 16.11.2005
(73) Proprietor: ITT MANUFACTURING ENTERPRISES, INC., Wilmington, Delaware 19801 (US)
(72) Inventor: Claus, Patrick, 57690 Haute Vigneulles (FR); Champlon, Lionel, 57000 Metz (FR)
(74) Representative: Kohn, Philippe

(56) References cited:
- GB-A- 2 336 636
- US-A- 5 590 914
- US-A- 5 913 852
- US-B1- 6 237 963

## Description

The invention proposes an arrangement for connecting a rigid tube to a flexible tube.

More particularly, the invention proposes an arrangement for connecting a rigid tube to a flexible tube, of the type in which an upstream end section of the rigid tube is pushed coaxially into a complementary downstream end section of the flexible tube, and of the type which comprises a tubular sleeve which extends coaxially around the downstream end section of the flexible tube and is crimped radially onto the flexible tube to fix the rigid tube to the flexible tube by radial clamping.

Rigid tubes connected to flexible tubes are used particularly in automotive construction, for producing the braking circuit connecting the vehicle brakes to the master cylinder.

The rigid tubes are formed by bending so as to suit the various forms of the vehicle and so that the braking circuit does not impede the installation of the other components of the vehicle within the chassis.

The flexible tubes are used so that the braking circuit can be deformed, thus simplifying the fitting of the circuit to the vehicle, and allowing a part fixed to the body of the vehicle, such as the master cylinder for example, to be connected to a part that can move with respect to the body, such as a brake caliper mounted on a wheel of the vehicle for example.

Document GB-A-2 336 636 describes a braking circuit comprising two rigid tubes connected by a flexible tube, and an arrangement for connecting an upstream end section of a rigid tube to a complementary downstream end section of the flexible tube.

However, with this arrangement, the upstream end section of the rigid tube, the complementary downstream end section of the flexible tube and the sleeve are straight.

In addition, the flexible tube in this circuit is bent.

In order to limit the deformation of the flexible tube, it has been proposed for the rigid tube to be bent in the region of the arrangement which is situated on the rigid tube, downstream of the arrangement.

In addition, this bend in the rigid tube is situated a certain distance away from the arrangement, which distance is dependent in particular on the method used to produce the bend.

Thus, a straight section of the rigid tube and the arrangement which is also straight extend between the flexible tube and the bend, and that accordingly increases the bulk of the circuit in the region of the arrangement.

It is an object of the invention to propose an arrangement for connecting a rigid tube to a flexible tube for which the bend in the rigid tube is situated near the flexible tube.

To this end, the invention proposes an arrangement of the type described hereinabove, characterized in that the sleeve and the upstream end section of the rigid tube are curved at least in part and with more or less the same radius of curvature.

According to other features of the invention:
- the sleeve and the upstream end section of the rigid tube are produced by bending, before they are assembled;
- the upstream end section of the rigid tube comprises at least one straight portion and one curved portion which run on from one another, and the sleeve comprises a straight part situated in line with the straight portion of the upstream end section of the rigid tube which is deformed radially so as to crimp the sleeve;
- the upstream end section of the rigid tube comprises two straight upstream and downstream end portions connected by the curved portion, and the sleeve comprises two straight upstream and downstream end parts, each situated in line with an associated straight portion of the upstream end section of the rigid tube;
- the downstream end of the sleeve comprises an internal radial flange which is in abutment in the downstream direction against a radial bulge on the downstream end of the upstream end section of the rigid tube;
- the upstream end of the upstream end section of the rigid tube has a radial bulge;
- the radius of curvature is equal to twice the diameter of the sleeve;
- the radius of curvature is equal to three times the diameter of the sleeve;
- the upstream end section of the rigid tube can be pushed coaxially into the sleeve before it is pushed coaxially into the downstream end section of the flexible tube.

Other features and advantages of the invention will become apparent from reading the detailed description which follows, for an understanding of which reference will be made to the attached figures among which:

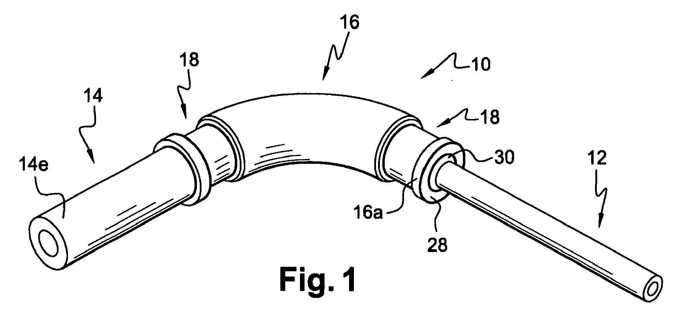

- Figure 1 is a schematic perspective depiction of an arrangement according to the invention;
- Figure 2 is an axial section through the arrangement depicted in Figure 1;
- Figure 3 is a view similar to that of Figure 2, in which the rigid tube and the sleeve are fitted before the flexible tube is fitted.

In the description which follows, elements that are identical, similar or analogous will be denoted by the same reference numerals.

The figures depict an arrangement 10 for connecting a rigid tube 12 to a flexible tube 14, in which an upstream end section 12a of the rigid tube 12 is pushed coaxially into a downstream end section 14a of the flexible tube 14.

The arrangement 10 also comprises a tubular sleeve 16 which extends coaxially around the downstream end section 14a of the flexible tube 14, and therefore coaxially around the upstream end section 12a of the rigid tube 12, and which is crimped radially onto the downstream end section 14a of the flexible tube 14 so as to fix the rigid tube 12 to the flexible tube 14.

To do this, the sleeve 16 comprises two upstream and downstream end parts 18 which are deformed radially by performing the crimping of two associated portions 20 of the downstream end section 14a of the flexible tube 14 onto two portions 22 of the upstream end section 12a of the rigid tube 12.

Crimping the sleeve 16 also allows the connection to be a sealed one.

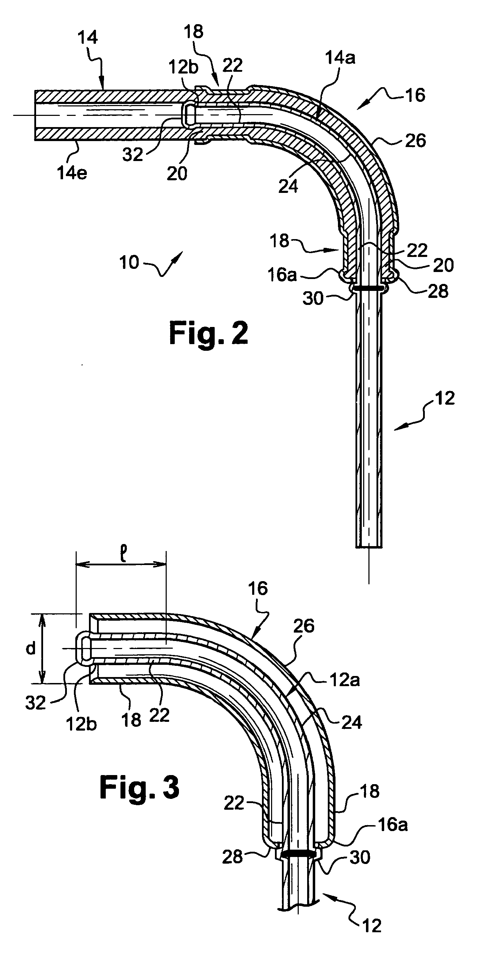

In accordance with the invention and as can be seen in greater detail in Figure 3, the upstream end section 12a of the rigid tube 12 and the sleeve 16 are partially bent, which makes it possible to reduce the space required by the arrangement 10 if the braking circuit has an elbow situated in the region of the downstream end section 14a of the flexible tube 14.

In this instance, the upstream end section 12a of the rigid tube 12 and the sleeve 16 are bent at right angles. However, it will be understood that the invention is not restricted to this embodiment of the arrangement and that the angle of bending may have any other magnitude.

As can be seen in Figure 3, the upstream end section 12a of the rigid tube 12, which is bent in accordance with the invention, comprises two upstream and downstream straight portions 22 which are connected by a bent portion 24.

The upstream and downstream straight portions 22 each extend in the region of a respective upstream or downstream end of the upstream end section 12a of the rigid tube 12.

The sleeve 16 according to the invention, which is itself also bent, comprises two straight parts 18 and a bent part 26 connecting the straight parts.

According to another aspect of the invention, the upstream end section 12a of the rigid tube 12 and the sleeve 16 are bent with more or less the same radius of curvature. This allows the upstream end section 12a of the rigid tube 12 and the sleeve 16 to be effectively coaxial.

The straight parts 18 of the sleeve 16 in this case are the upstream and downstream end parts of the sleeve 16, which are deformed radially so as to crimp the sleeve 16.

Thus, each straight part 18 of the sleeve 16 is situated in line with a straight portion 22 of the upstream end section 12a of the rigid tube 12.

This makes it possible to have uniform clamping of the portions 22 of the end section between the straight parts 18 of the sleeve 16 and the straight portions 22 of the upstream end section 12a of the rigid tube 12.

In addition, in order to improve the coaxiality of the assembly, the bent part 26 of the sleeve 16 is situated in line with the curved portion 24 of the upstream end section 12a of the rigid tube 12.

According to another aspect of the invention that makes it possible to simplify the method of producing the arrangement 10, the upstream end section 12a of the rigid tube 12 and the sleeve 1 are formed individually by bending before they are assembled.

This is because the bending of a tubular element, that is to say in this case the bending of the rigid tube 12 and of the sleeve 16 requires special-purpose tooling so as to avoid kinking the part that is to be bent. In consequence, simultaneous bending of the downstream end section 12a of the rigid section 12 and of the sleeve 16 would require the use of special-purpose tooling that is excessively expensive.

The radius of curvature of the upstream end section 12a of the rigid tube 12 and of the sleeve 16 are determined as a function of the dimensions of the straight portions 22 of the upstream end section 12a of the rigid tube 12, so as to allow the entirety of the upstream end section 12a of the rigid tube 12 to be introduced coaxially into the sleeve 16.

The radius of curvature is in particular determined as a function of the length "I" of the straight portions 22 of the upstream end section 12a of the rigid tube 12 and as a function of the inside diameter "d" of the sleeve 16.

Thus, according to a first embodiment of the invention, the radius of curvature is twice the diameter of the sleeve 16, and according to another embodiment of the invention, the radius of curvature is equal to three times the diameter of the sleeve 16.

As can be seen in Figure 3, the positioning of the sleeve 16 with respect to the upstream end section 12a of the rigid tube 12, along its main axis, is achieved by means of an internal radial flange 28 of the downstream end 16a of the sleeve 16 which is in abutment against a radial bulge 30 of the downstream end of the upstream end section 12a of the rigid tube 12.

In this instance, the upstream end section 12a of the rigid tube 12 is introduced into the sleeve 16 through a movement from the downstream to the upstream direction, with reference to Figure 3. In consequence, the flange 28 is in abutment in the downstream direction against the bulge 30.

Once the sleeve 16 has been mounted around the upstream end section 12a of the rigid tube 12, the downstream end section 14a of the flexible tube 14 is pushed around the upstream end section 12a of the rigid tube 12.

The flexibility of the flexible tube 14 allows the downstream end section 14a of the flexible tube 14 to adopt the same curvature as the upstream end section 12a of the rigid tube 12 and as the sleeve 16.

The downstream end section 14a of the flexible tube 14 is pushed around the upstream end section 12a of the rigid tube 12 until its downstream end comes into abutment against the flange 28 of the sleeve 16, at the same time immobilizing the sleeve 16 between the downstream end of the downstream end section 14a of the flexible tube 14 and the radial bulge 30 of the rigid tube 12.

The upstream end 12b of the upstream end section 12a of the rigid tube 12 also comprises a second external radial bulge 32 which causes a local radial deformation of the downstream end section 14a of the flexible tube 14 so as to hold the downstream end section 14a of the flexible tube 14 in position with respect to the upstream end section 12a of the rigid tube 12.

Next, in a final step of assembling the arrangement 10 according to the invention, the straight parts 18 of the sleeve 16 are crimped radially onto the downstream end section 14a of the flexible tube 14, to clamp the downstream end section 14a of the flexible tube 14 onto the upstream end section 12a of the rigid tube 12.

The arrangement 10 according to the invention is particularly well suited to motor vehicle braking circuits in which the fluid pressure is sometimes very high.

To prevent the flexible tube 14 from expanding radially under the effect of the pressure, and according to an alternative form of embodiment of the invention (not depicted), the outer cylindrical wall 14e of the flexible tube 14 is covered with a metal sheath, or braid, of known type, which is configured in such a way as to prevent the flexible tube 14 from deforming radially.

In order to prevent the sheath from sliding coaxially with respect to the flexible tube, at least the upstream straight part 18 of the sleeve 16 is crimped onto one end of the sheath.

The arrangement 10 according to the invention makes it possible to bend a section of the rigid tube 12 where it connects with the flexible tube, thus simplifying the design of the braking circuit.

## Claims

1. Arrangement (10) for connecting a rigid tube (12) to a flexible tube (14), of the type in which an upstream end section (12a) of the rigid tube (12) is pushed coaxially into a complementary downstream end section (14a) of the flexible tube (14),
and of the type which comprises a tubular sleeve (16) which extends coaxially around the downstream end section (14a) of the flexible tube (14) and is crimped radially onto the flexible tube (14) to fix the rigid tube (12) to the flexible tube (14) by radial clamping,
**characterized in that** the sleeve (16) and the upstream end section (12a) of the rigid tube (12) are curved at least in part and with more or less the same radius of curvature.

2. Arrangement (10) according to the preceding claim, **characterized in that** the sleeve (16) and the upstream end section (12a) of the rigid tube (12) are produced by bending, before they are assembled.

3. Arrangement (10) according to any one of the preceding claims, **characterized in that** the upstream end section (12a) of the rigid tube (12) comprises at least one straight portion (22) and one curved portion (24) which run on from one another, and **in that** the sleeve (16) comprises a straight part (18) situated in line with the straight portion (22) of the upstream end section (12a) of the rigid tube (12) which is deformed radially so as to crimp the sleeve (16).

4. Arrangement (10) according to the preceding claim, **characterized in that** the upstream end section (12a) of the rigid tube (12) comprises two straight upstream and downstream end portions (22) connected by the curved portion (24), and **in that** the sleeve (16) comprises two straight upstream and downstream end parts (18), each situated in line with an associated straight portion (22) of the upstream end section (12a) of the rigid tube (12).

5. Arrangement (10) according to any one of the preceding claims, **characterized in that** the downstream end of the sleeve (16) comprises an internal radial flange (28) which is in abutment in the downstream direction against a radial bulge (30) on the downstream end of the upstream end section (12a) of the rigid tube (12).

6. Arrangement (10) according to any one of the preceding claims, **characterized in that** the upstream end (12b) of the upstream end section (12a) of the rigid tube (12) has a radial bulge (32).

7. Arrangement (10) according to any one of the preceding claims, **characterized in that** the radius of curvature is equal to twice the diameter (d) of the sleeve (16).

8. Arrangement (10) according to any one of Claims 1 to 6, **characterized in that** the radius of curvature is equal to three times the diameter (d) of the sleeve (16).

9. Arrangement (10) according to any one of the preceding claims, **characterized in that** the upstream end section (12a) of the rigid tube (12) can be pushed coaxially into the sleeve (16) before it is pushed coaxially into the downstream end section (14a) of the flexible tube (14).

## Patentansprüche

1. Anordnung (10) zum Verbinden eines steifen Rohres (12) mit einem biegsamen Schlauch (14), bei der ein stromaufwärts gerichtetes Endteilstück (12a) des steifen Rohres (12) in ein komplementäres, stromabwärts gerichtetes Endteilstück (14a) des Schlauches (14) koaxial geschoben wird, und die eine röhrenförmige Muffe (16) aufweist, welche sich um das stromabwärts gerichtete Endteilstück (14a) des Schlauches (14) koaxial erstreckt, und welche mit einer radialen Crimpverbindung zum biegsamen Schlauch (14) hin versehen ist, um das steife Rohr (12) mit dem biegsamen Schlauch (14) durch ein radiales Einklemmen zu befestigen;
**dadurch gekennzeichnet, dass** die Muffe (16) und das aufwärts gerichtete Endteilstück (12a) des steifen Rohres (12) zumindest zum Teil und mit mehr oder weniger dem gleichen Krümmungsradius gebogen sind.

2. Anordnung (10) gemäß dem vorhergehenden Anspruch, **dadurch gekennzeichnet, dass** die Muffe (16) und das stromaufwärts gerichtete Endteilstück (12a) des steifen Rohres (12) durch ein Biegeverfahren hergestellt worden sind, bevor sie zusammengesetzt werden.

3. Anordnung (10) gemäß einem beliebigen der vorhergehenden Ansprüche, **dadurch gekennzeichnet, dass** das stromaufwärts gerichtete Endteilstück (12a) des steifen Rohres (12) mindestens einen geraden Abschnitt (22) und einen gebogenen Abschnitt (24) aufweist, die ineinander übergehen, und dass die Muffe (16) ein gerades Stück (18) aufweist, dass sich in einer Linie mit dem geraden Abschnitt (22) des stromaufwärts gerichteten Endteilstücks (12a) des steifen Rohres (12) befindet, das radial deformiert ausgebildet ist, um mit der Muffe (16) eine Crimpverbindung einzugehen.

4. Anordnung (10) gemäß dem vorhergehenden Anspruch, **dadurch gekennzeichnet, dass** das stromaufwärts gerichtete Endteilstück (12a) des steifen Rohres (12) zwei stromaufwärts- und -abwärts gerade gerichtete Endabschnitte (22) aufweist, die über den Bogenabschnitt (24) verbunden sind, und dass die Muffe (16) zwei stromaufwärts- und - abwärts gerichtete, gerade Endstücke (18) aufweist, wobei sich jedes mit dem verbundenen, geraden Abschnitt (22) des stromaufwärts gerichteten Endteilstücks (12a) des steifen Rohres (12) in einer Linie befindet.

5. Anordnung (10) gemäß einem der vorhergehenden Ansprüche, **dadurch gekennzeichnet, dass** das stromabwärts gerichtete Ende der Muffe (16) einen radialen Innenflansch (28) aufweist, der in stromabwärtiger Richtung auf einem radialen Rundwulst (30) an dem stromabwärtigen Ende des stromaufwärts gerichteten Endteilstücks (12a) des steifen Rohres (12) im Anschlag auflagert.

6. Anordnung (10) gemäß einem beliebigen der vorhergehenden Ansprüche, **dadurch gekennzeichnet, dass** das stromaufwärts gerichtete Endteilstück (12b) des steifen Rohres (12) einen radialen Rundwulst (32) aufweist.

7. Anordnung (10) gemäß einem der vorhergehenden Ansprüche, **dadurch gekennzeichnet, dass** der Krümmungsradius dem zweifachen Durchmesser (D) der Muffe (16) entspricht.

8. Anordnung (10) gemäß einem der Ansprüche 1 bis 6, **dadurch gekennzeichnet, dass** der Krümmungsradius dem dreifachen Durchmesser (D) der Muffe (16) entspricht.

9. Anordnung (10) gemäß einem der vorhergehenden Ansprüche, **dadurch gekennzeichnet, dass** das stromaufwärts gerichtete Endteilstück (12a) des steifen Rohres (12) in die Muffe (16) koaxial geschoben werden kann, bevor es in das stromabwärts gerichtete Endteilstück (14a) des biegsamen Schlauches (14) koaxial geschoben wird.

## Revendications

1. Agencement (10) pour le raccordement d'un tube rigide (12) à un tube flexible (14), du type dans lequel un tronçon terminal amont (12a) du tube rigide (12) est poussé coaxialement dans un tronçon terminal aval complémentaire (14a) du tube flexible (14),
et du type qui comprend un manchon tubulaire (16) qui s'étend coaxialement autour du tronçon terminal aval (14a) du tube flexible (14) et qui est serti radialement sur le tube flexible (14) pour fixer le tube rigide (12) sur le tube flexible (14) par serrage radial,
**caractérisé en ce que** le manchon (16) et le tronçon terminal amont (12a) du tube rigide (12) sont incurvés au moins partiellement et avec plus ou moins le même rayon de courbure.

2. Agencement (10) selon la revendication précédente, **caractérisé en ce que** le manchon (16) et le tronçon terminal amont (12a) du tube rigide (12) sont produits par cintrage, avant qu'ils soient assemblés.

3. Agencement (10) selon l'une quelconque des revendications précédentes, **caractérisé en ce que** le tronçon terminal amont (12a) du tube rigide (12) comprend au moins une portion rectiligne (22) et une portion incurvée (24) qui se font mutuellement suite, et **en ce que** le manchon (16) comprend une partie rectiligne (18) située en alignement avec la portion rectiligne (22) du tronçon terminal amont (12a) du tube rigide (12) qui est déformée radialement de manière à sertir le manchon (16).

4. Agencement (10) selon la revendication précédente, **caractérisé en ce que** le tronçon terminal amont (12a) du tube rigide (12) comprend deux portions terminales rectilignes (22) amont et aval reliées par la portion incurvée (24), et **en ce que** le manchon (16) comprend deux parties terminales (18) amont et aval, situées chacune en alignement avec une portion rectiligne associée (22) du tronçon terminal amont (12a) du tube rigide (12).

5. Agencement (10) selon l'une quelconque des revendications précédentes, **caractérisé en ce que** l'extrémité aval du manchon (16) comprend une bride radiale interne (28) qui est en butée dans la direction aval contre un bourrelet radial (30) sur l'extrémité aval du tronçon terminal amont (12a) du tube rigide (12).

6. Agencement (10) selon l'une quelconque des revendications précédentes, **caractérisé en ce que** l'extrémité amont (12b) du tronçon terminal amont (12a) du tube rigide (12) possède un bourrelet radial (32).

7. Agencement (10) selon l'une quelconque des revendications précédentes, **caractérisé en ce que** le rayon de courbure est égal à deux fois le diamètre (d) du manchon (16).

8. Agencement (10) selon l'une quelconque des revendications 1 à 6, **caractérisé en ce que** le rayon de courbure est égal à trois fois le diamètre (d) du manchon (16).

9. Agencement (10) selon l'une quelconque des revendications précédentes, **caractérisé en ce que** le tronçon terminal amont (12a) du tube rigide (12) peut être poussé coaxialement dans le manchon (16) avant d'être poussé coaxialement dans le tronçon terminal aval (14a) du tube flexible (14).
